# DEMANDE DE BREVET EUROPEEN

(11) **EP 1 175 121 A1**
(43) Date de publication de la demande: **23.01.2002**
(21) Numéro de dépôt: 01401798.2
(22) Date de dépôt: 05.07.2001
(51) Int. Cl.: H04Q 11/00

(54) **Dispositif de commutation permettant une diffusion**

(30) Priorité: 13.07.2000 FR 0009202
(71) Demandeur: ALCATEL, 75008 Paris (FR)
(72) Inventeur: Franceus, Guy, 91630 Cheptainville (FR)
(74) Mandataire: Sciaux, Edmond

(57) **Abrégé**

La présente invention concerne un dispositif de commutation permettant une diffusion, ce dispositif comportant des cellules élémentaires de commutation optique acceptant α signaux d'entrée et permettant de sélectionner β signaux de sortie, ladite cellule de commutation possédant des capacités de diffusion 1 vers p. Elle comporte :
- un premier étage (ST1) comportant α diviseurs optiques 1 vers p ;
- un deuxième étage (ST2) comportant p.α commutateurs optiques 1 vers β;
- un troisième étage (ST3) comportant β commutateurs optiques p.α vers 1.

Elle concerne en particulier la réalisation de réseaux de Clos.

## Description

La présente invention se situe dans le domaine des transmissions d'informations utilisant des moyens optiques. En particulier, elle concerne les commutateurs optiques utilisés dans des réseaux utilisant ce type de liaison afin d'effectuer des fonctions de routage.

Les réseaux de communication doivent posséder des fonctionnalités permettant de d'offrir des services évolués. Ils ne doivent pas être bloquants, tout en autorisant la diffusion des signaux reçus. La diffusion de ces signaux est utilisée pour transmettre à plusieurs destinataires un même signal ou pour acheminer un même signal par différents chemins.

Par le document JAJZSZCZYK ET AL, : « TEE TYPE PHOTONIC SWITCHING NETWORKS » IEEE NETWORK, IEEE INC. NEW-YORK, US, vol. 9 , n°1, 1995, pages 10-16, XP000486554, ISSN : 0890-8044, il est connu d'utiliser des architectures utilisant à la fois la commutation spectrale et la commutation spatiale. Ces architectures ont la propriété de permettre une diffusion du signal. Le principe de ces architectures consiste à multiplexer un ensemble de signaux possédant une répartition en longueur d'onde empêchant toute interférence. Ce principe gère difficilement le cas de deux signaux possédant la même longueur d'onde. Il est nécessaire de procéder à un traitement supplémentaire des signaux dans ces cas.

Dans ces architectures, il faut compenser les pertes d'énergie dues au multiplexage. On utilise pour cela des amplificateurs optiques à large bande. Il en résulte que les commutateurs utilisant ce type d'architecture sont assez coûteux.

Le but de l'invention est de permettre la réalisation d'une matrice optique non bloquante présentant une capacité de diffusion, et une réduction des pertes d'insertion, sans utilisation de circuit de ré-amplification.

L'invention concerne un dispositif de commutation permettant une diffusion de 1 vers N, caractérisé en ce qu'il comprend :
- un premier étage constitué de N cellules élémentaires comportant α entrées et β sorties, et permettant une diffusion de 1 vers p ; chaque cellule comportant :
   -- un premier étage comportant α diviseurs optiques 1 vers p ;
   -- un deuxième étage comportant p.α commutateurs optiques 1 vers β;
   -- un troisième étage comportant β commutateurs optiques p.α vers 1 ;
- et un second étage constitué de N commutateurs N x 1, chacune des sorties de chacune des cellules étant reliée à l'une des entrées d'un commutateur N x 1.

L'invention sera mieux comprise à la lecture de la description qui suit, se référant aux dessins annexés relatifs à un mode de réalisation non limitatif où :
- La figure 1 représente le schéma synoptique d'une cellule élémentaire de commutation.
- La figure 2 représente un exemple de dispositif de commutation selon l'invention.
- La figure 3 représente un exemple de réseau de Clos selon l'invention.

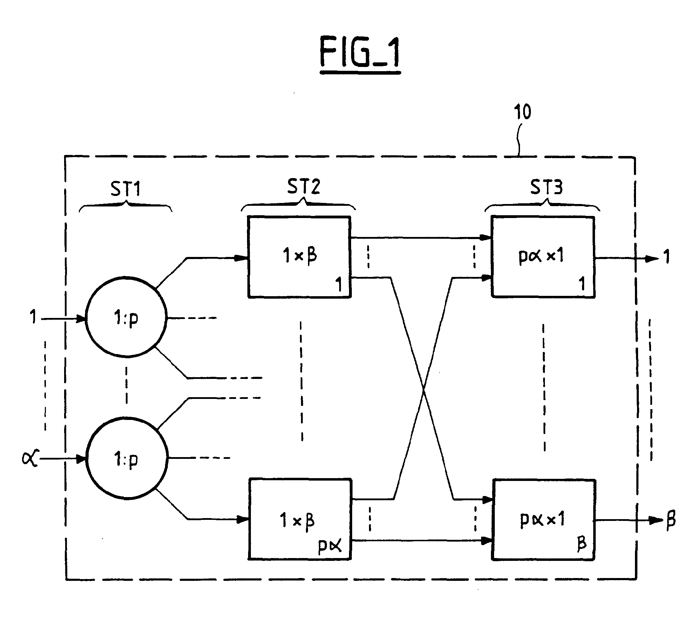

La cellule élémentaire représentée sur la **figure 1** accepte α signaux d'entrée et permet de sélectionner β signaux de sortie, et elle possède des capacités de diffusion 1 vers p. Elle comporte :
- un premier étage ST1 comportant α diviseurs optiques 1 vers p ;
- un deuxième étage ST2 comportant p. α commutateurs optiques 1 vers β;
- un troisième étage ST3 comportant β commutateurs optiques p. α vers 1.

Chaque diviseur optique du premier étage ST1 comporte p sorties reliées respectivement à une entrée de chacun des commutateurs du deuxième étage ST2. Il permet de créer p signaux semblables à un signal d'entrée. Chaque commutateur du deuxième étage comporte β sorties reliées respectivement à une entrée de chacun des commutateurs du troisième étage ST3. Le nombre β est appelé facteur d'expansion. Les p signaux diffusés peuvent être acheminés par les commutateurs du deuxième étage ST2 et du troisième étage ST3, respectivement vers p sorties parmi les β sorties du troisième étage.

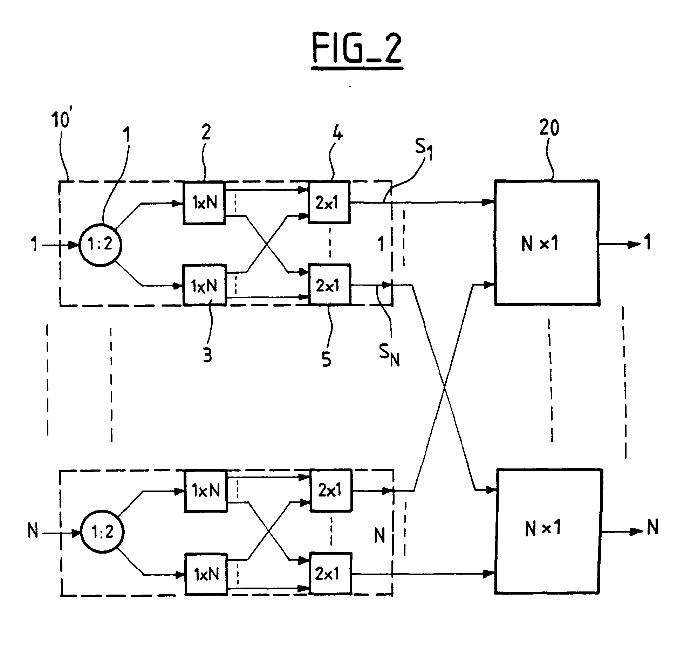

La **figure 2** représente un exemple de dispositif de commutation N vers N, comprenant un premier étage constitué de N cellules élémentaires 10', pour la diffusion 1 vers 2, selon l'invention. Dans cet exemple, α=1, β=N, p = 2 . Cet exemple comprend en outre un second étage constitué de N commutateurs optiques de type N vers 1. Les N entrées de chacun des commutateurs 20 sont reliées respectivement à une sortie de chacune des N cellules élémentaires 10'.

Chaque cellule élémentaire 10' comprend un diviseur optique 1, de type 1 vers 2, dont les deux sorties sont reliées respectivement à l'entrée d'un commutateur 2 et d'un commutateur3, de type 1 vers N. Les N sorties de chacun des commutateurs 2 et 3 sont chacune reliée à l'entrée d'un des N commutateurs 4, ....., 5, de type 2 vers 1, du troisième étage de la cellule élémentaire 10'. Chaque signal appliqué à une entrée d'une cellule 10' est divisé en 2 signaux identiques. Chacun des commutateurs 2 et 3 commute un de ces deux signaux vers l'une de ses N sorties. Chaque commutateur 4, ... . , 5 sélectionne un signal parmi deux signaux que lui fournit les commutateurs 2 et 3. Le dispositif restitue ainsi 2 fois le signal appliqué à l'entrée de la cellule 10', sur N sorties S₁, ..., S_{N} de la cellule 10'.

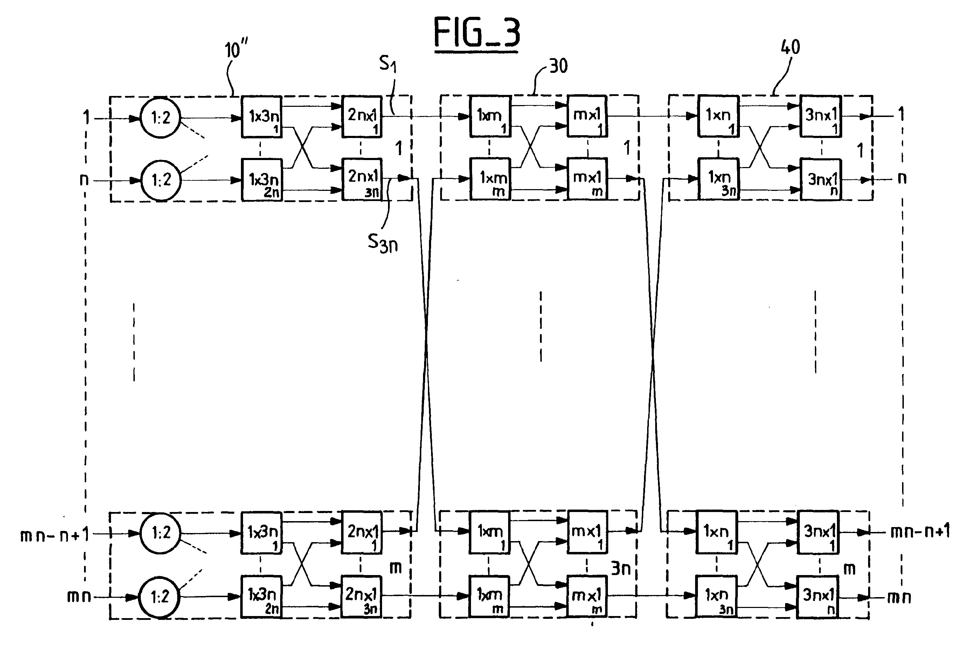

La **figure 3** représente un exemple de réseau de Clos à trois étages, possédant une capacité de diffusion de 1 vers 2, grâce à des cellules élémentaires 10''.

Le réseau de Clos représenté comprend un premier étage constitué de m cellules élémentaires 10'' selon l'invention, analogues aux cellules 10 et 10' décrites précédemment, comprenant chacune n entrées et 3 n sorties S₁, ..., S₃ₙ. Cet ensemble de N cellules élémentaires 10'' comporte n.m entrées et 3n.m sorties. Le deuxième étage est formé par un ensemble de 3n matrices 30 de type m vers m, dont les entrées sont reliées respectivement aux sorties des cellules élémentaires 10". Le troisième étage est constitué par un ensemble de m matrices 40 de type 3n vers n, présentant au total m.n sorties.

Dans cet exemple, chaque cellule élémentaire 10'' possède n entrées, donc α= n; par ailleurs, β=3n, p = 2 . D'une façon générale, afin de respecter la condition de non blocage, il est nécessaire d'utiliser un facteur d'expansion β au moins égal à 3α-2, où α représente le nombre d'entrées dans chaque cellule élémentaire 10'' du premier étage. Chaque cellule 10'' comporte :
- un premier étage constitué de n diviseurs optiques 1 vers 2 ;
- un deuxième étage constitué de 2n commutateurs 1 vers 3n, dont les 2n entrées sont reliées respectivement aux 2n sorties des diviseurs optiques ;
- et un troisième étage constitué de 3n commutateurs de type 2n vers 1, les 2n entrées de chaque commutateur étant reliées respectivement à une sortie de chacun des commutateurs du deuxième étage.

## Revendications

1. Dispositif de commutation permettant une diffusion de 1 vers N, **caractérisé en ce qu'**il comprend :
- un premier étage constitué de N cellules élémentaires (10') comportant α entrées et β sorties, et permettant une diffusion de 1 vers p ; chaque cellule comportant :
-- un premier étage (ST1) comportant α diviseurs optiques 1 vers p ;
-- un deuxième étage (ST2) comportant p. α commutateurs optiques 1 vers β ;
-- un troisième étage (ST3) comportant β commutateurs optiques p.α vers 1 ;
- et un second étage constitué de N commutateurs N x1, chacune des sorties de chacune des cellules étant reliée à l'une des entrées d'un commutateur N x 1.

2. Dispositif de commutation selon la revendication 1, dans lequel α = 1 , β = N , p = 2.

3. Réseau de Clos permettant une diffusion, **caractérisé en ce qu'**il comporte un premier étage comportant des cellules élémentaires de commutation optique (10 '') , chaque cellule comportant α entrées et β sorties, et :
- un premier étage (ST1) comportant α diviseurs optiques 1 vers p ;
- un deuxième étage (ST2) comportant p.α commutateurs optiques 1 vers β;
- un troisième étage (ST3) comportant β commutateurs optiques p.α vers 1.

4. Réseau de Clos selon la revendication 3, **caractérisé en ce que** :
α= n , β = 3n , p = 2
